# EUROPÄISCHE PATENTSCHRIFT

(11) **EP 2 014 171 B1**
(45) Veröffentlichungstag und Bekanntmachung des Hinweises auf die Patenterteilung: **29.09.2010**
(21) Anmeldenummer: 07013811.0
(22) Anmeldetag: 13.07.2007
(51) Int. Cl.: A21B 3/13, A21B 3/15

(54) **Backblech**
Baking tray
Plateau de cuisson

(43) Veröffentlichungstag der Anmeldung: 14.01.2009
(73) Patentinhaber: Anneliese Mertes GmbH, 52249 Eschweiler (DE)
(72) Erfinder: Mertes, Thomas, 52249 Eschweiler (DE)
(74) Vertreter: Naeven, Ralf

(56) Entgegenhaltungen:
- WO-A-03/054450
- DE-U1-202004 002 065
- ES-A1- 2 213 465
- FR-A- 2 572 891
- FR-A- 2 856 117
- GB-A- 2 304 546
- GB-A- 2 381 186
- US-A1- 2005 204 932

## Beschreibung

Die Erfindung betrifft ein Backblech, umfassend einen Rahmen und ein mit dem Rahmen verbundenes Bodenelement, wobei der Rahmen mindestens ein Auflagestück mit jeweils mindestens zwei Verbindungslöchern aufweist, in denen jeweils der Schaft eines Verbindungselements angeordnet ist, welches das auf dem Auflagestück aufliegende Bodenelement mit dem Auflagestück verbindet, wobei die Verbindungselemente Bolzen mit einem dem Bodenelement abgewandten, aus dem Auflagestück herausragenden Bolzenschaft sind.

Backbleche der vorgenannten Art sind aus der GB-A-2 381 186 bekannt. Darin ist es offenbart, gewellte Bodenelemente aus einem biologisch abbaubaren Material mittels bolzenartiger Verbindungselemente mit einem Rahmen zu verbinden. Zur Lösung dieser Verbindung ist ein Werkzeug, z.B ein Dorn, notwendig, der an jedem der Verbindungselemente angesetzt werden muss.

Backbleche der eingangs genannten Art werden auch von der Anmelderin vertrieben (Prospekt "Anlagenbleche und Baguettebleche" aus dem Jahre 2007). Derartige Backbleche werden in industriellen Backanlagen eingesetzt und weisen eine Größe bis zu 2400 mm x 800 mm auf. Die Backbleche können glatte oder auch gewellte Bodenelemente aufweisen. Die Backbleche mit gewelltem Boden können z. B. als Baguettebleche zur Herstellung von Baguette eingesetzt werden. Der Rahmen besteht aus Edelstahl und das Bodenelement in der Regel aus Aluminium, wobei die das Backgut tragende Oberseite antihaftend, z. b. mit Silikon oder Fluorpolymer (Teflon) beschichtet ist. Die Bodenelemente sind über Nietverbindungen fest mit dem Rahmen verbunden. Dabei kann die Verbindung "schwimmend" ausgeführt sein. D. h., das Bodenelement kann sich relativ zum Rahmen verschieben, um Unterschiede im Ausdehnungskoeffizienten zwischen Rahmen und Bodenelement auszugleichen. Dies kann insbesondere bei flachen Bodenelementen notwendig sein, da die Backbleche hohen Temperaturunterschieden im Bereich von minus 40°C bis 250°C ausgesetzt werden.

Die Antihaftbeschichtung der Backbleche verschleißt nach einigen tausend Backvorgängen. Wenn die Antihaftwirkung nachlässt und das Backprodukt zu kleben beginnt, müssen die Bodenelemente mit einer neuen Antihaftbeschichtung versehen oder ausgetauscht werden. Hierfür sind die Bodenelemente von den Edelstahlrahmen zu entfernen, weshalb die vorhandenen Nietverbindungen ausgebohrt, also zerstört werden müssen. Anschließend wird das neue Bodenelement oder das neu beschichtete Bodenelement auf den Rahmen aufgenietet. Allein das Abnehmen und Aufnieten der der Bodenelemente ist sehr zeitaufwendig und nimmt pro Backblech etwa 45 Minuten in Anspruch. Für die Aufarbeitung von oftmals hunderten von Blechen kann der Zeitaufwand mehrere Wochen betragen. Da der Kunde seine Produktionsanlagen weiter betreiben will, ist er gezwungen, einen zweiten Satz Bleche vorzuhalten oder diesen vom Hersteller zu mieten. Der vollständige Aufarbeitungsprozess wird in der Regel beim Hersteller der Backbleche durchgeführt, wodurch außerdem hohe Transportkosten entstehen.

Es ist nun Aufgabe der vorliegenden Erfindung, ein Backblech der eingangs genannten Art zur Verfügung zu stellen, das eine vereinfachte Demontage und Montage der Bodenelemente am Rahmen ermöglicht.

Bei einem Backblech der eingangs genannten Art wird diese Aufgabe durch die kennzeichnenden Merkmale des Anspruchs 1 gelöst.

Hiermit ist ein Schnellverschluss realisiert, der es ermöglicht, die Bodenelemente ohne Spezialwerkzeug vor Ort und vom Kunden selbst, d. h. beim Betreiber der Backanlagen, zu demontieren und später zu montieren. Hierdurch wird im Vergleich zur Lösung und Neuerstellung von Nietverbindungen erheblich Zeit eingespart. Zudem brauchen dann lediglich die wesentlich weniger sperrigen und leicht ineinander stapelbaren Bodenelemente zum Hersteller und von dort zurück transportiert zu werden, so dass auch der Transportaufwand deutlich reduziert wird. Bei einem bloßen Ersatz der verbrauchten Bodenelemente durch neue Bodenelemente kann der Austausch auch während der laufenden Produktion erfolgen, so dass der Betreiber der Backanlage keinen oder allenfalls einen kleineren Austauschsatz benötigt.

Das erfindungsgemäße Backblech kann auch so ausgebildet sein, dass das Auflagestück ein rohrförmiges oder im Profil u-förmiges Rahmenstück ist und das mindestens eine Sicherungselement von dem mindestens einen Rahmenstück umfasst ist In diesem Fall befindet sich das Sicherungselement innerhalb des Rahmens und ist auf diese Weise vor Verschmutzung oder unabsichtlicher Handhabung geschützt.

Des Weiteren kann das erfindungsgemäße Backblech auch so ausgebildet sein, dass das mindestens eine Sicherungselement in Längsrichtung des zugehörigen Rahmenstückes verfahrbar ist.

Durch Verschiebung in Längsrichtung des Rahmenstückes kann das Sicherungselement auf diese Weise zwischen der Sicherungsposition, in der die Bolzen gesichert und damit das Bodenelement hinreichend fixiert ist, zu einer Freigabeposition verfahren werden, in der die Bolzen entnommen werden können.

Alternativ ist auch denkbar, dass das Sicherungselement senkrecht zur Längsrichtung des Rahmenstückes zwischen Sicherungsposition und Freigabeposition verfahrbar ist. Dies könnte jedoch nachteilig hinsichtlich der Breitenausdehnung des Rahmenstückes sein.

Es kann vorteilhaft sein, das erfindungsgemäße Backblech so auszubilden, dass das mindestens eine Sicherungselement im zugehörigen Rahmenstück geführt ist. Die Führung kann dadurch erfolgen, dass das Sicherungselement in seinen Außenmaßen den Innenmaßen des zugehörigen Rahmenstückes angepasst und durch diese Innenmaße mit Spiel geführt ist. Bei einem Rahmenstück mit rechteckigem Querschnittsprofil könnte das Sicherungselement beispielsweise u-förmig ausgebildet sein, wobei die Schenkel des Sicherungselementes bis zur entsprechenden Innenwand des Rahmenstückes reichen können und somit durch sämtliche Innenwände des Rahmenstückes eine Führung erfolgt. Es ist dabei mit ausreichenden Toleranzen zu arbeiten, um ein Verklemmen des Sicherungselements auch bei leichter Verformung des Backblechrahmens zu verhindern. Es kann aber auch vorgesehen sein, im Rohr gesonderte Auflageelemente oder Einprägungen vorzusehen, auf denen das Sicherungselement geführt ist.

Zusätzliche Führungen im Rohrstück würden es auch erlauben, als Sicherungselement ein Flacheisen einzusetzen oder - im Falle von Rahmenstücken mit kreisförmigen oder in sonstiger Weise rundem Profil - rohrförmige Sicherungselemente einzusetzen, deren Außendurchmesser deutlich kleiner ist als der Innendurchmesser des entsprechenden Rahmenstückes.

Das erfindungsgemäße Backblech kann auch so ausgebildet sein, dass das mindestens eine Sicherungselement Sicherungsschlitze aufweist, wobei in der Sicherungsposition jeweils einer der Bolzenschäfte durch einen der Sicherungsschlitze hindurch greift. Dabei kann vorgesehen sein, dass die Bolzenschäfte jeweils einen vom Bodenelement abgewandten Bolzenschaftendbereich mit einem die lichte Weite des zugehörigen Sicherungsschlitzes übersteigenden Durchmesser aufweisen. Auf diese Weise wird ein Formschluss zwischen dem Bolzenschaftendbereich und den den jeweiligen Sicherungssschlitz begrenzenden Teilen des Sicherungselements bewirkt. Die Sicherungsschlitze können durch parallele Seitenränder begrenzt sein. Die Seitenränder können aber auch einen Winkel zueinander aufweisen, z.B. V-förmig ausgebildet sein, so dass die Einführung des Bolzenschaftes in den Sicherungsschlitz vereinfacht wird.

Des Weiteren kann das erfindungsgemäße Backblech auch so ausgebildet sein, dass die Sicherungsschlitze Teil jeweils eines Sicherungsloches sind, wobei die Sicherungslöcher im Wesentlichen eine Schlüssellochform aufweisen und die Sicherungsschlitze jeweils in einen Schlüssellochkopf münden, dessen Durchmesser die lichte Weite des zugehörigen Sicherungsschlitzes sowie den Durchmesser des Bolzenschaftendbereichs übersteigt.

In der Freigabeposition des Sicherungselements würde der Schlüssellochkopf mit jeweils einem Verbindungsloch des Auflagestückes fluchten, so dass der Bolzen durch Verbindungsloch und Schlüssellochkopf hindurch gesteckt werden kann. Durch Verfahren des Sicherungselements in die Sicherungsposition umfasst anschließend der Sicherungsschlitz den Schaft des Bolzens. Die Sicherung des Bolzens mittels Formschluss erfolgt z. B. durch den Schaftendbereich, dessen Durchmesser die lichte Weite des Sicherungsschlitzes übersteigt.

Weiterhin kann das erfindungsgemäße Backblech so ausgebildet sein, dass der Eingriff des mindestens einen Sicherungselementes in die Bolzenschäfte derart ausgestaltet ist, dass aufgrund des Verfahrens des Sicherungselements von der Freigabeposition in die Sicherungsposition die Bolzenköpfe in Richtung auf das Auflagestück hin gezogen werden. Mit diesem auf den Bolzenkopf ausgeübten Zwang wird auch das Bodenelement auf das Auflagenstück gepresst und damit fixiert. Dies ist insbesondere dann sinnvoll, falls eine "schwimmende" Befestigung nicht notwendig oder nicht gewünscht ist. Alternativ zu den Sicherungsschlitzen sind für den Eingriff des Sicherungselementes auch stiftförmige Elemente denkbar, die in eine Bohrung im zugehörigen Bolzenschaft eingreifen. Bei geeigneter Ausrichtung derartiger stiftförmiger Elemente können die Bolzenköpfe beim Verfahren des Sicherungselements in die Sicherungsposition ebenfalls in Richtung auf das Auflagestück hin bewegt werden.

Es kann jedoch auch vorteilhaft sein, dass Backblech so auszubilden, dass in dem mindestens einen Sicherungselement dem Bodenelement abgewandte Führungsrampen vorgesehen sind, wobei die Führungsrampen die Sicherungsschlitze aufweisen, in Verfahrrichtung des Sicherungselements geneigt sind und beim Verfahren des Sicherungselements von der Freigabeposition in die Sicherungsposition auf den Bolzenschaftendbereich wirken.

Weiterhin kann vorgesehen sein, dass die Bolzen einstückig mit dem Bodenelement sind. Alternativ sind separate Bolzen vorgesehen, die einen verdickten Bolzenkopf aufweisen. In diesem Fall sind im Bodenelement entsprechende Löcher vorgesehen, die den Durchtritt des vollständigen Schafts des Bolzens erlauben, jedoch nicht den Durchtritt des Bolzenkopfes.

Das erfindungsgemäße Backblech kann auch so ausgebildet sein, dass das mindestens eine Sicherungselement auf seiner dem Auflagestück zugewandten Seite Sicherungslöcher aufweist, die Querschnittsform der Bolzenschäfte und der Umfang der Sicherungslöcher derart aufeinander abgestimmt sind, dass eine Drehung der im zugehörigen Sicherungsloch befindlichen Bolzen um ihre Längsachse nicht möglich ist, und die Bolzenschäfte jeweils einen Schaftabsatz aufweisen, der in der Sicherungsposition das Sicherungselement untergreift.

Dabei kann es vorteilhaft sein, das erfindungsgemäße Backblech so auszubilden, dass der Schaftabsatz zur Verfahrrichtung des Sicherungselements geneigt ist. Der geneigte Schaftabsatz kann den Bolzen während des Verfahrens des Sicherungselements von der Freigabe- in die Sicherungsposition in eine weitere Bewegung in seine axiale Richtung zwingen, um so den Bolzenkopf auf das Bodenelement zu pressen oder - bei einem mit dem Bodenelement einstückigen Bolzen - das Bodenelement auf das Auflagestück zu pressen. Hierdurch können Rampen innerhalb des Sicherungselements eingespart werden.

Schließlich kann es vorteilhaft sein, das erfindungsgemäße Backblech so auszubilden, dass mindestens ein elastisches Spannelement zur Fixierung des mindestens einen Sicherungselementes in der Sicherungsposition vorgesehen ist. Dabei ist es sinnvoll, das Spannelement so vorzugeben, dass gegen seine elastische Kraft das Sicherungselement von der Sicherungsposition in die Freigabeposition gebracht werden kann.

Bevorzugte Ausbildungsformen des erfindungsgemäßen Backblechs sind im Folgenden anhand von Figuren dargestellt. Es zeigen
Fig. 1 bis 4: den Eckbereich einer ersten Ausbildungsform eines Baguette-Backbleches in verschiedenen Ansichten,
Fig. 5: Teil einer weiteren Ausbildungsform eines Baguette-Backbleches im seitlichen Querschnitt,
Fig. 6 bis 10: den Eckbereich einer weiteren Ausbildungsform eines Baguette-Backbleches in verschiedenen Ansichten,
Fig. 11 bis 14: den Eckbereich einer Ausbildungsform eines flachen Backbleches in verschiedenen Ansichten,
Fig. 15 bis 17: den Eckbereich einer weiteren Ausbildungsform eines flachen Backbleches in verschiedenen Ansichten,
Fig. 18 bis 22: den Eckbereich einer weiteren Ausbildungsform eines Baguette-Backbleches in verschiedenen Ansichten,

Die im Folgenden dargestellten unterschiedlichen Ausbildungsbeispielen weisen eine Reihe einander entsprechende Elemente auf, die sich nicht oder in Einzelheiten unterscheiden. Derartige einander entsprechende Elemente sind in allen Figuren mit derselben arabischen Ziffer gekennzeichnet und unterscheiden sich in den Bezugszeichen allein durch einen angehängten Buchstaben.

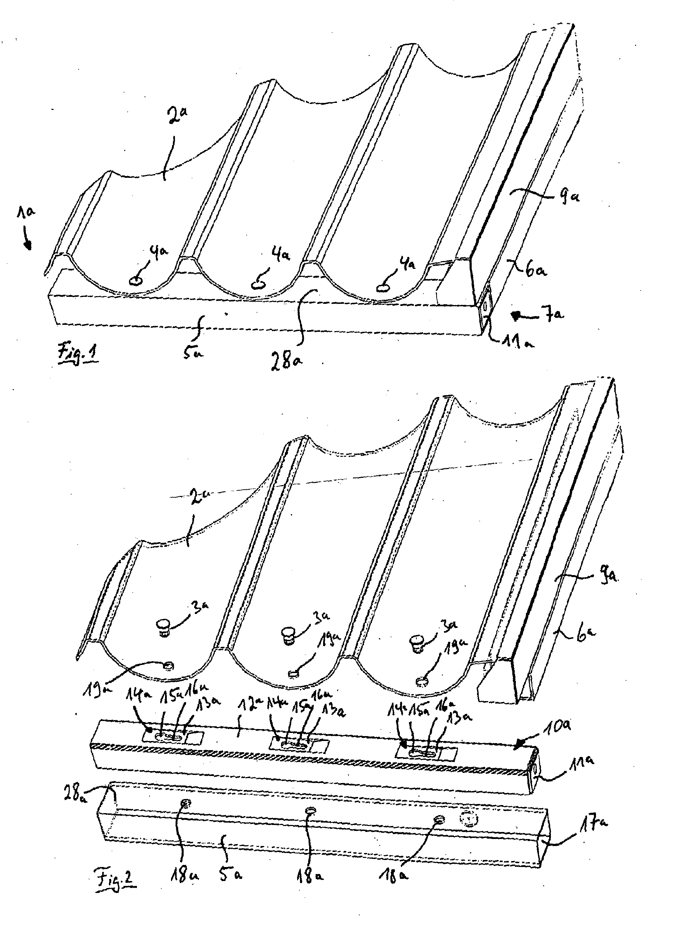

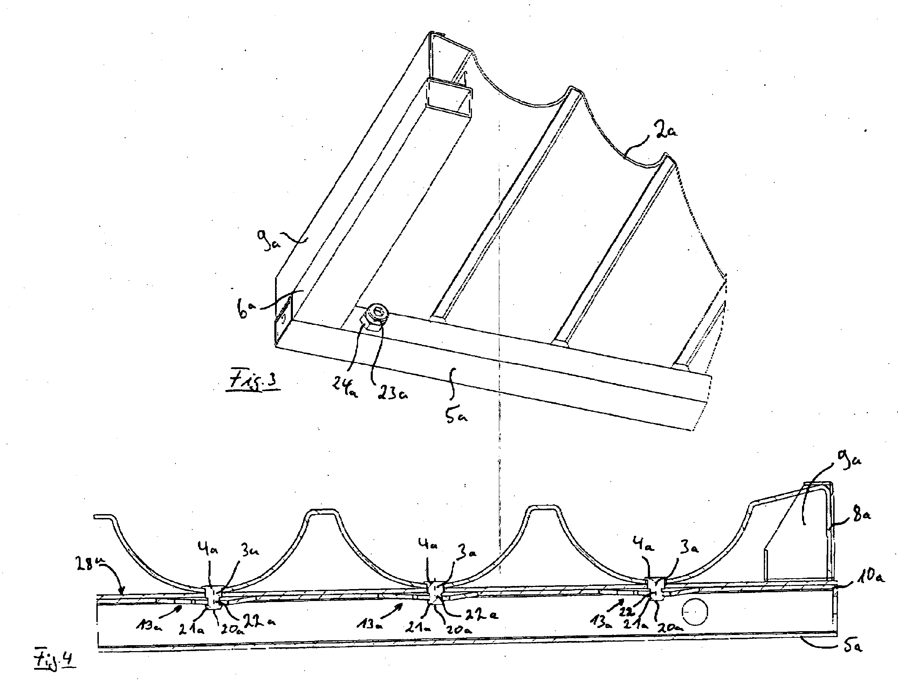

Die Fig. 1-4 zeigen in unterschiedlichen Ansichten Teile eines Baguette-Backbleches 1a. Fig. 1 zeigt einen Eckbereich des Baguette-Backblechs 1 a mit einem Bodenelement 2a, das zur Aufnahme von hier nicht gezeigten Baguette-Teiglingen die typische gewellte Form aufweist. Das Bodenelement 2a ist mittels Bolzen 3a (s. auch Fig. 2), von denen in Figur 1 nur die Bolzenköpfe 4a zu sehen sind, an einem ersten Rahmenstück 5a fixiert. Dieses erste Rahmenstück 5a ist z. B. durch Schweißen mit einem zweiten Rahmenstück 6a verbunden. Mit weiteren hier nicht dargestellten Rahmenstücken wird ein rechteckiger Rahmen 7a für das Baguette-Backblech 1 a gebildet. Mit den Bolzen 3a ist das Bodenelement 2a auf einer Auflagenseite 28a des ersten Rahmenstückes 5a aufgelegt. Eine entsprechende Befestigung des Bodenelements 2a befindet sich auf einem weiteren, in den Figuren nicht dargestellten zum ersten Rahmenstück 5a parallelen Rahmenstück. Die beiden anderen Seitenränder des in der Aufsicht rechteckigen Bodenelements 2a stützen sich jeweils über einen senkrechten Schenkel 8a (s. Fig. 4) auf einem Seitenhaltelement 9a ab. Das Seitenhaltelement 9a ist im Wesentlichen auf dem zweiten Rahmenstück 6a fixiert. Ein entsprechendes Seitenhaltelement ist auf dem hier nicht dargestellten weiteren, zum zweiten Rahmenstück 6a parallelen Rahmenstück angeordnet. Die Seitenhaltelemente 9a verhindern ein seitliches Verschieben des Bodenelements 2a.

Fig. 2 zeigt den Eckbereich des Baguette-Backblechs gemäß Fig. 1 in einer Explosionsdarstellung. Darin sind das erste Rahmenstück 5a zu sehen sowie ein Sicherungselement 10a, das sich im zusammengebauten Zustand innerhalb des ersten Rahmenstückes 5a befindet. Das Sicherungselement 10a hat ein hier nicht vollständig sichtbares U-Profil. Auf seiner Oberseite 12a weist das Sicherungselement 10a Führungsrampen 13a auf, die zur Längsachse des Sicherungselements 10a geneigt sind. Im seitlichen Querschnitt gemäß Fig. 4 ist die Neigung der Führungsrampen 13a deutlich zu erkennen. In den Führungsrampen 13a befinden sich schlüssellochförmige Sicherungslöcher 14a mit einem Schlüssellochkopf 15a und einem Sicherungsschlitz 16a. Zur Befestigung des Bodenelements 2a auf dem ersten Rahmenstück 5a wird zunächst das Sicherungselement 10a in eine Öffnung 17a des ersten Rahmenstücks 5a hineingeschoben, bis die Schlüssellochköpfe 15a mit Verbindungslöchern 18a des ersten Rahmenstückes 5a fluchten. Das Bodenelement 2a wird so auf die Auflageseite 28a aufgelegt, dass Bolzenlöcher 19a, die sich im Bodenelement 2a befinden, ebenfalls mit den Schlüssellochköpfen 15a bzw. den Verbindungslöchern 18a fluchten. Anschließend werden die Bolzen 3a in die fluchtenden Löcher 15a, 18a und 19a gesteckt. Der Bolzen 3a ragt dabei mit seinem Schaft 20a innerhalb des Sicherungselements 10a aus dem Schlüssellochkopf 15a heraus. Die Bolzen 3a weisen an ihrem unteren Ende einen Schaftendbereich 21 a auf, dessen Durchmesser gegenüber einem verjüngten Schaftmittelbereich 22a größer ist. Das Sicherungselement 10a befindet sich noch in einer Freigabeposition, die das Herausziehen der Bolzen 3a erlaubt.

Nun wird das Sicherungselement 10a weiter in das erste Rahmenstück 5a hineingeschoben, so dass der jeweilige verjüngte Schaftmittelbereich 22a der Bolzen 3a vom zugehörigen Sicherungsschlitz 16a aufgenommen wird. Der Durchmesser des Schaftendbereichs 21 a ist größer als die lichte Weite der Sicherungsschlitze 16a. Aufgrund der Neigung der Führungsrampe 13a werden die Bolzen 3a beim Hineinschieben des Sicherungselements 10a nach unten gezogen, so dass die Bolzenköpfe 4a, deren Durchmesser den der Bolzenlöcher 19a übersteigt, das Bodenelement 2a auf die Auflageseite 28a des ersten Rahmenstückes 5a presst. Damit ist die Sicherungsposition des Sicherungselements 10a erreicht. Das Verschieben des Sicherungselements 10a von der Freigabeposition in die Sicherungsposition kann über hier nicht dargestellte Hilfsmittel, die am vorderen Ende 11 a des Sicherungselements 14a angreifen, durchgeführt werden.

Um das Sicherungselement 10a in der Sicherungsposition zu fixieren, ist eine Fixierschraube 23a vorgesehen, die in Fig. 3 dargestellt ist. In der Darstellung gemäß Fig. 3 greift die Fixierschraube 23a mit ihrem Gewinde in das Gewinde einer auf der Rahmeninnenseite auf dem ersten Rahmenstück 5a aufgeschweißten Schraubenmutter 24a. Die Fixierschraube 23a greift durch eine an entsprechender Stelle in das erste Rahmenstück 5a eingebrachte Fixierbohrung hindurch in das Sicherungselement 10a ein. Entweder wird dieses durch die Fixierschraube 23a geklemmt, oder aber im Sicherungselement 10a befindet sich an entsprechender Stelle ebenfalls eine hier nicht dargestellte Bohrung, in die die Fixierschraube 23a eingreift und so ein verschieben des Sicherungselement 10a in Richtung seiner Längsachse verhindert.

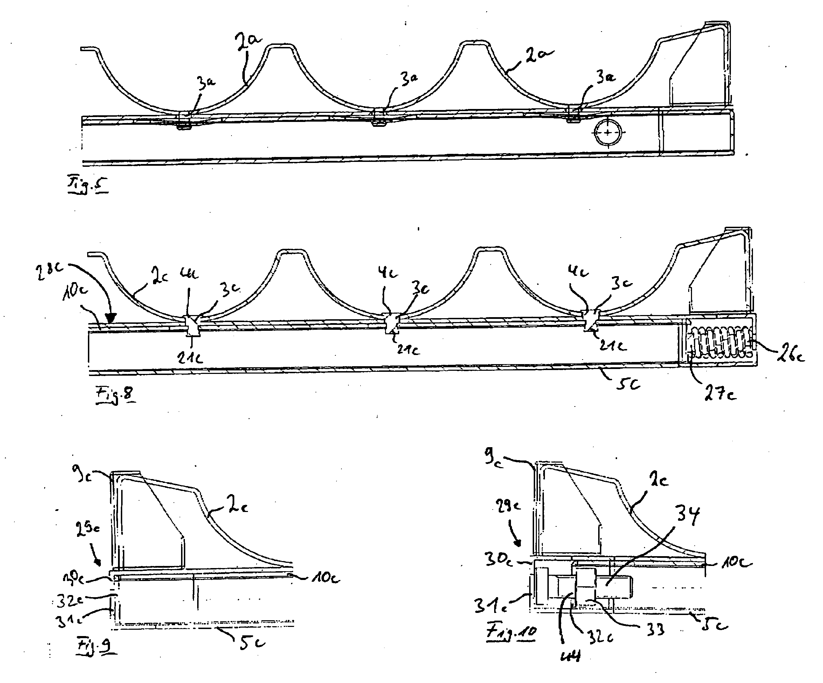

Fig. 5 zeigt im seitlichen Querschnitt eine Variante des in den Fig. 1-4 dargestellten Ausbildungsbeispiels, bei der die Bolzen 3a mit dem Bodenelement 2a einstückig sind, was durch Tiefziehen oder Prägen erreicht werden kann. Ansonsten stimmt dieses Ausbildungsbeispiel mit dem der Fig. 1-4 überein, weshalb auf die dortige Beschreibung verwiesen werden kann.

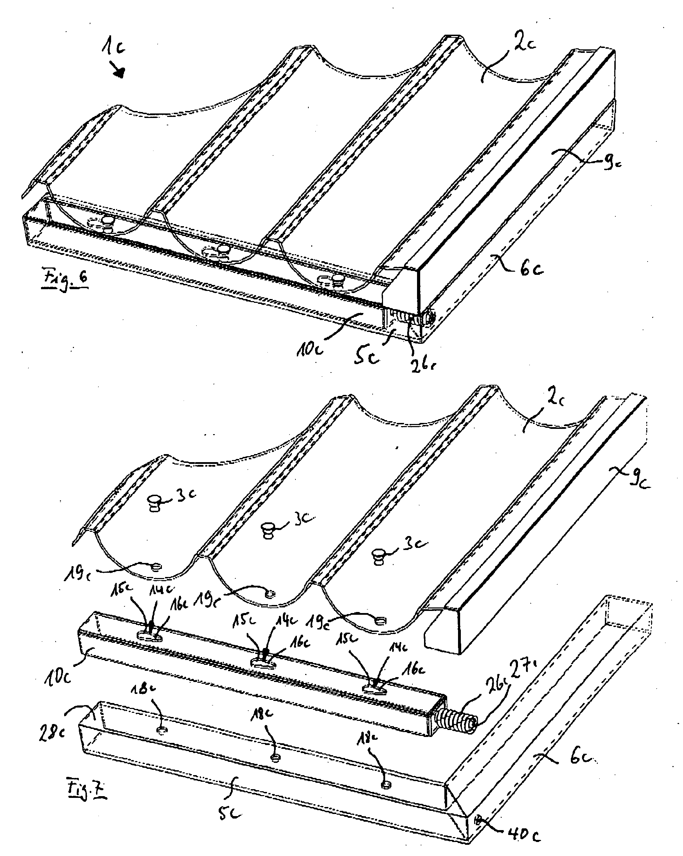

In den Fig. 6-10 ist eine weitere Variante eines Baguette-Backblechs 1c dargestellt. Bodenelement 2c und Seitenhalteelement 9c stimmen mit den entsprechenden Elementen des Ausbildungsbeispiels gemäß den Fig. 1-4 überein, weshalb diesbezüglich auf die dortige Beschreibung verwiesen wird. In Fig. 6 sind einzelne Elemente, nämlich das Bodenelement 2c, das erste Rahmenstück 5c sowie das zweite Rahmenstück 6c und das Sicherungselement 10c durchsichtig dargestellt. Fig. 7 zeigt die Anordnung gemäß Fig. 6 in einer Explosionsdarstellung. Das Sicherungselement 10c weist an seinem vorderen Ende ein Federelement 26c auf, das um einen Dorn 27c herum angeordnet ist. Das Sicherungselement 10c ist dauerhaft im ersten Rahmenstück 5c angeordnet und ragt mit Dorn 27 und Federelement 26c in das zweite Rahmenstück 6c hinein, das auf Gehrung mit dem ersten Rahmenstück 5c, z.B. durch Schweißen, verbunden ist. Alternativ könnte das erste Rahmenstück 5c auch durchgehend als Quader ausgelegt sein. In diesem Fall würde das Sicherungselement 10c allein im ersten Rahmenstück 5c angeordnet sein. Um das Bodenelement 2 mit der Auflageseite 28c des ersten Rahmenstückes 5c zu verbinden, wird das Sicherungselement 10c von dem in Fig. 7 nicht dargestellten hinteren Ende 29c (s. Fig. 9 oder 10) des ersten Rahmenstückes 5c soweit gegen die Kraft des Federelementes 26c in Richtung auf das zweite Rahmenstück 6c gedrückt, bis der Schlüssellochkopf 15c mit den Verbindungslöchern 8c des ersten Rahmenstückes 5c fluchtet. Dabei greift der Dorn 27c zur Zentrierung in eine Bohrung 40c des zweiten Rahmenstückes 6c. Das Bodenelement 2c liegt nun so auf der Auflageseite 28c auf, dass die dortigen Bolzenlöcher 19c mit den Verbindungslöchern 18c und den Schlüssellochköpfen 15c fluchten, so dass die Bolzen 3c eingesteckt werden können. Das Sicherungselement 10c befindet sich in der Freigabeposition. Anschließend wird das Sicherungselement 10c von der Kraft des Federelements 26c angetrieben in Längsrichtung in die Sicherungsposition gebracht, die in Fig. 8 im seitlichen Querschnitt dargestellt ist. Die Sicherungsschlitze 16c haben in Aufsicht in etwa V-förmige Form, wobei die hierdurch gegebene Gesamtform der Sicherungslöcher 14c weiterhin als Schlüssellochform betrachtet wird.

Die Bolzen 3c weisen in lhrem Schaftendbereich 21 c eine Kegelstumpfform auf, die ihren größten Durchmesser am unteren Ende des Bolzens 3c hat. Dieser größte Durchmesser ist größer als die größte lichte Weite des zugehörigen V-förmigen Sicherungsschlitzes 16c. Die Kegelstumpfform des Schaftendbereichs 21 c der Bolzen 3c bewirkt zusammen mit der V-Form der Sicherungsschlitze 16c, dass beim Verfahren des Sicherungselementes 10c von der Freigabeposition in die Sicherungsposition die Bolzen 3c in das Sicherungselement 10c hineingezogen werden und damit die Bolzenköpfe 4c das Bodenelement 2c auf die Auflageseite 28c des ersten Rahmenstückes 5c pressen.

In Fig. 9 und 10 sind zwei Alternativen dargestellt, wie das Sicherungselement 10c im ersten Rahmenstück 5c bewegt werden kann. In Fig. 9 ist ersichtlich, dass das erste Rahmenstück 5c an seinem hinteren Ende 29c ein angeschweißtes Endstück 30c mit einer Öffnung 31c aufweist. Durch diese Öffnung 31c hindurch, kann mittels hier nicht dargestellter Vorrichtungen auf das hintere Ende 32c des Sicherungselements 10c zugegriffen werden.

Fig. 10 zeigt eine alternative Vorgehensweise an. An dem hinteren Ende 32c des Sicherungselements 10c ist eine Schweißmutter 33 angeschweißt. In das Innengewinde der Schweißmutter 33 greift das Außengewinde einer Stellschraube 34, die durch eine entsprechende Öffnung 44 des hinteren Endes 32c des Sicherungselements 10c hindurchgeführt ist. Sicherungselement 10c und Stellschraube 34 befinden sich vollständig innerhalb des ersten Rahmenstückes 5c, das an seinem hinteren Ende 29c wiederum das angeschweißte Endstück 30c aufweist. Durch die Öffnung 31 c hindurch kann auf die Stellschraube 34 zugegriffen werden.

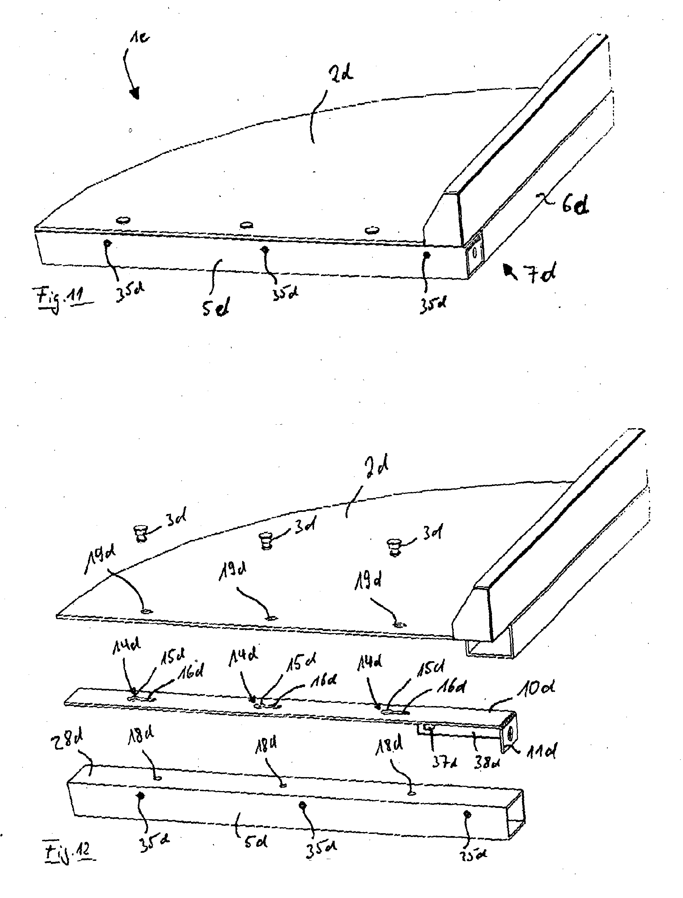

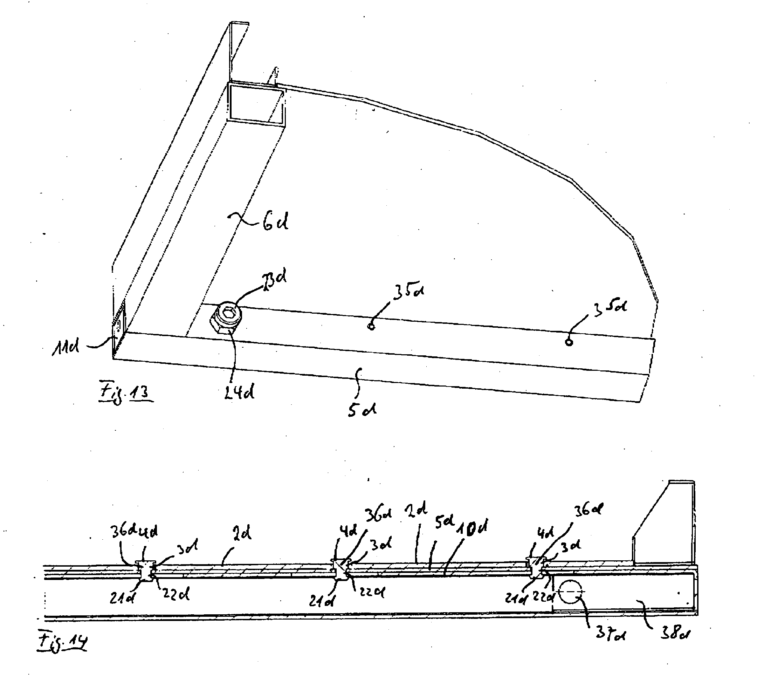

In den Fig. 11-14 ist ein Eckbereich eines weiteren Ausbildungsbeispiels eines Backblechs 1 d dargestellt. Ein Bodenelement 2d ist als Flachblech ausgeführt. Es stützt sich auf einen Rahmen 7d, von dem in den Figuren ein erstes Rahmenstück 5d sowie ein zweites Rahmenstück 6d zu sehen sind. Fig. 12 zeigt eine Explosionszeichnung des Eckbereichs gemäß Fig. 11. Ein Sicherungselement 10d befindet sich im zusammengebauten Zustand innerhalb des ersten Rahmenstückes 5d. Das Sicherungselement 10d ist als Flachelement ausgeführt, das schlüssellochförmige Sicherungslöcher 14d aufweist. Zur Fixierung wird das Bodenelement 2d derart auf die Auflageseite 28d des ersten Rahmenstückes 5d platziert, dass Bolzenlöcher 19d des Bodenelements 2d mit Verbindungslöchern 18d des ersten Rahmenstückes 5d fluchten. Das Sicherungselement 10d wird in die Freigabeposition gebracht, in der Schlüssellochköpfe 15d der Sicherungslöcher 14d ebenfalls mit dem jeweils zugehörigen Verbindungsloch 18d und Bolzenloch 19d fluchten. Das Sicherungselement 10d ist durch in das erste Rahmenstück 5d hineinragende Stifte geführt, von denen in den Fig. 11-13 jeweils lediglich die Ansatzpunkte 35d sichtbar sind. Das vordere Ende 11d des Sicherungselements 10d ist abgewinkelt und bildet damit einen Angriffspunkt für hier nicht dargestellte Mittel zum Verfahren des Sicherungselements 10d innerhalb des ersten Rahmenstückes 5d.

Nachdem Bolzen 3d durch die Bolzenlöcher 19d, die Schlüssellochköpfe 15d und die Verbindungslöcher 18d gesteckt wurden, wird das Sicherungselement 10d weiter in das erste Rahmenstück 5d hinein gefahren, so dass ein von den Sicherungsschlitzen 16d der Sicherungslöcher 14d jeweils ein verjüngter Schaftmittelbereich 22d aufgenommen wird. Ein Schaftendbereich 21 d weist einen Durchmesser auf, der die lichte Weite des zugehörigen Sicherungsschlitzes 16d übersteigt, so dass die Bolzen 3d in ihrer axialen Längsrichtung gesichert sind. Beim Verfahren des Sicherungselements 10d in die Sicherungsposition wird der Bolzenkopf 4d nicht auf das Bodenelement 2d gepresst. Außerdem ist der Durchmesser eines Schaftanfangsbereichs 36d etwas geringer als der Durchmesser der Bolzenlöcher 19d des Bodenelements 2d, so dass das Bodenelement 2d schwimmend gelagert ist. Das Sicherungselement 10d ist im ersten Rahmenstück 5d durch eine Fixierschraube 23d fixiert, deren Gewinde in eine am ersten Rahmenstück 5d angeschweißte Schraubenmutter 24d eingreift. Des Weiteren greift die Fixierschraube 23d in eine Bohrung 37d eines Fixierbleches 38d, das zum Sicherungselement 10d gehört und angeschweißt oder abgewinkelt ist.

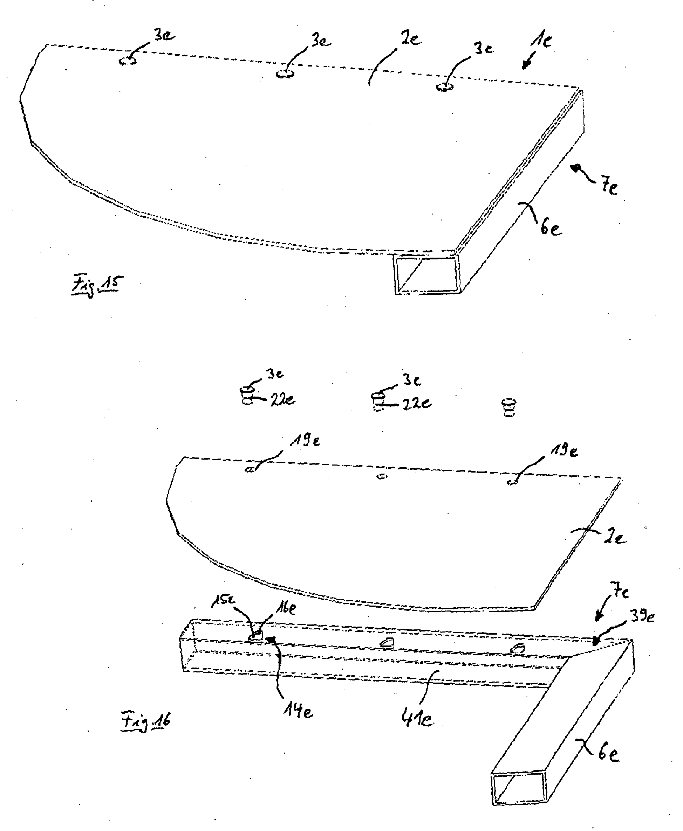

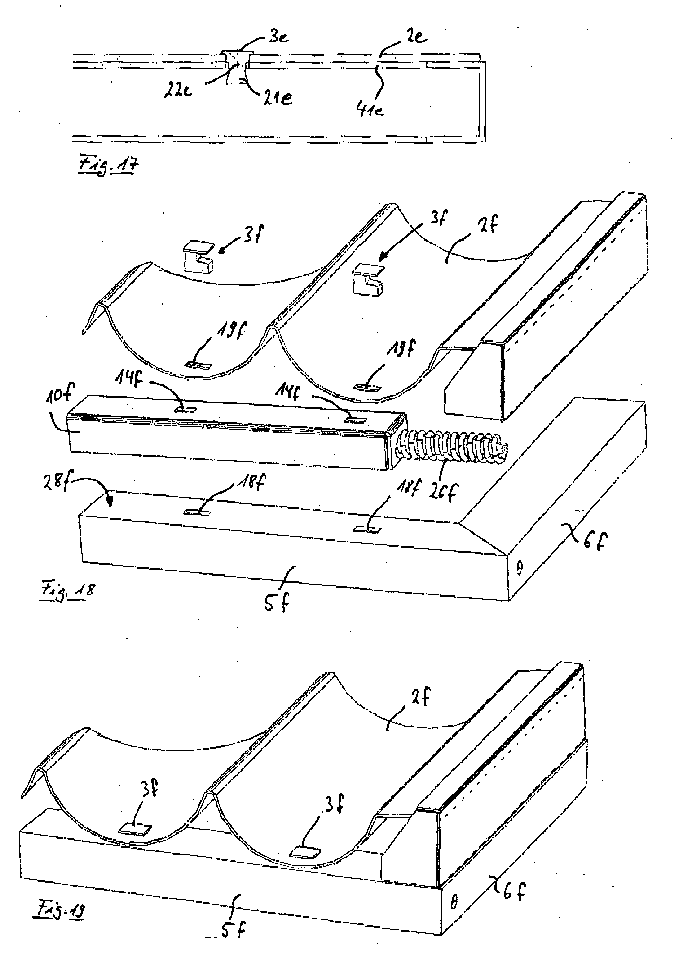

In sämtlichen bislang beschriebenen Ausbildungsbeispielen des erfindungsgemäßen Backblechs 1 ist es möglich, das Backblech 1 sowohl an dem in den Zeichnungen gezeigten ersten Rahmenstück 5 als auch an dem in den bisherigen Zeichnungen nicht gezeigten gegenüberliegenden, parallel verlaufenden Rahmenstück mit einem Sicherungselement 10 z.B. mit einem der bislang vorgestellten Varianten festzulegen. Alternativ ist es auch möglich, das Sicherungselement 10 allein im ersten Rahmenstück 5 einzusetzen und das Bodenelement 2 ohne besonderes Sicherungselement direkt am gegenüberliegenden dritten Rahmenstück 40 festzulegen, wie dies in den Fig. 15-17 gezeigt ist. Die Fig. 15 und 16 zeigen einen Eckbereich eines Backblechs 1e im Bereich des Kontaktes zwischen einem zweiten Rahmenstück 6e und einem dritten Rahmenstück 41 e, das in Fig. 15 nicht zu sehen ist und das parallel zum hier nicht dargestellten ersten Rahmenstück verläuft. Zur Befestigung eines Bodenelements 2e am Rahmen 7e wird das als Flachblech ausgebildete Bodenelement 2e derart auf die Auflageseite 39 des dritten Rahmenstückes 41 e abgelegt, dass Bolzenlöcher 19e des Bodenelements 2e mit einem entsprechenden Schlüssellochkopf 15e in der Auflageseite 39e des dritten Rahmenstückes 41 e fluchten. Die Schlüssellochköpfe 15e gehören zu den Sicherungslöchern 14e, die zudem einen V-förmigen Sicherungsschlitz 16e aufweisen, die jeweils in den zugehörigen Schlüssellochkopf 15e münden. Die Bolzen 3e werden nun durch die Bolzenlöcher 19e und die Schlüssellochköpfe 15e gesteckt. Anschließend wird das Bodenelement 2e parallel zur Längsrichtung des zweiten Rahmenelements 6e in die Sicherungsposition verschoben, so dass die Sicherungsschlitze 16e den zugehörigen Schaftmittelbereich 22e der Bolzen 3e aufnehmen. Die Bolzen 3e weisen einen Schaftendbereich 21e auf (s. Fig. 17), dessen Durchmesser größer ist als die lichte Weite des Sicherungsschlitzes 16e in der Endposition des Bodenelements 2e. Damit ist der Bolzen 3e in seiner Längsrichtung gesichert.

Anschließend wird das Bodenelement 2e am hier in den Fig. 15-17 nicht gezeigten ersten Rahmenstück mittels eines hier ebenfalls nicht sichtbaren Sicherungselements fixiert, wie das in den Fig. 1-14 beispielhaft in mehreren Varianten dargestellt wurde. Mit der Schlüsselloch-Fixierung im dritten Rahmenstück 41 e und der Fixierung mittels Sicherungselement im ersten Rahmenstück ist das Bodenelement 2e hinreichend sicher fixiert. Auf diese Weise kann ein Sicherungselement eingespart werden.

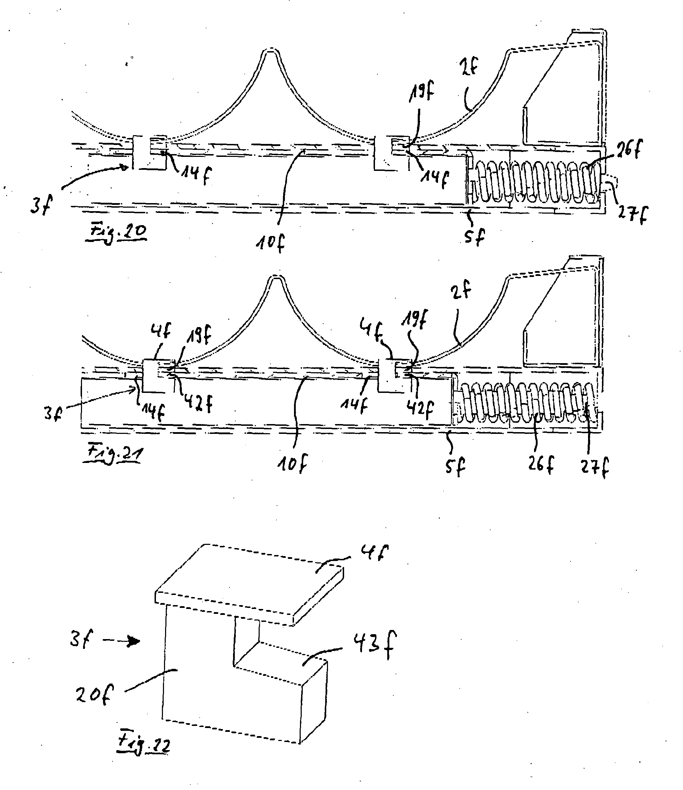

Fig. 18 bis 22 zeigen einen Eckbereich eines weiteren Ausbildungsbeispiels eines Baguette-Backbleches 2f. Fig. 18 ist die Explosionsdarstellung der Fig. 19. Das Bodenelement 2f ist auf der Auflageseite 28f eines zweiten Rahmenstückes 5f mittels Bolzen 3f fixiert. Ein Sicherungselement 10f befindet sich im Wesentlichen innerhalb des ersten Rahmenstückes 5f und liegt mit einem Federelement 26f am zweiten Rahmenstück 6f an. In einer gegen die Federkraft des Federelements 26 erreichten Freigabeposition (Fig. 20) fluchten Bolzenlöcher 19f des Bodenelements 2f jeweils mit einem Verbindungsloch 18f des ersten Rahmenstücks 5f sowie einem Sicherungsloch 14f des Sicherungselements 10f. Bolzenlöcher 19f, Verbindungslöcher 18f und Sicherungslöcher 14f weisen jeweils eine rechteckige Umfangsform auf. Die Bolzen 3f sind im Querschnitt ebenfalls rechteckig und so dimensioniert, dass sie mit ihrem Schaft 20f (Fig. 22) durch das jeweilige Bolzenloch 19f, Verbindungsloch 18f und Sicherungsloch 14f gesteckt werden können. Innerhalb der Löcher 19f, 18f und 14f kann sich der Bolzen 3f nicht mehr um eine zu seiner Längsachse parallelen Achse drehen. Das Federelement 26f ist um einen Dorn 27f gewunden, der in der Freigabeposition das Sicherungselement 10f zentrierend in eine Zentrierbohrung 40f des zweiten Rahmenstückes 6f eingreift.

Nach Einstecken der Bolzen 3f wird das Sicherungselement durch das Federelement 26f in die Sicherungsposition gedrückt, die in Fig. 21 dargestellt ist. Das Sicherungselement 10f wird dabei mit die Sicherungslöcher 14f begrenzenden Flachstücken 42f auf jeweils einen Schaftabsatz 43f der Bolzen 3f gedrückt. Die Schaftabsätze 43f sind zur Verfahrrichtung des Sicherungselements 10f sowie zu den Flachstücken 42f derart geneigt, dass beim Auffahren eines Flachstückes 42f auf den zugehörigen Schaftabsatz 43f der Bolzen 3f weiter in das Sicherungselement 10f hineingedrückt wird. Hierdurch wird der jeweilige Bolzenkopf 4f auf das Bodenelement 2f gezogen und dieses damit auf dem ersten Rahmenstück 5f fixiert.

Die in den Ausbildungsbeispielen dargestellten Varianten für die Ausgestaltung des Bodenelements 2, der Rahmenstücke 4,6 und 41, der Sicherungselemente 10 und Bolzen 3 können, für den Fachmann ersichtlich, in unterschiedlichster Weise miteinander kombiniert werden.

### Bezugszeichenliste

- 1: Baguette-Blech
- 2: Bodenelement
- 3: Bolzen
- 4: Bolzenkopf
- 5: Erstes Rahmenstück
- 6: Zweites Rahmenstück
- 7: Rahmen
- 8: Schenkel
- 9: Seitenhalteelement
- 10: Sicherungselement
- 11: Vorderes Ende des Sicherungselements
- 12: Oberseite des Sicherungselements
- 13: Führungsrampe
- 14: Sicherungslöcher
- 15: Schlüssellochkopf
- 16: Sicherungsschlitz
- 17: Öffnung des ersten Rahmenstücks
- 18: Verbindungsloch
- 19: Bolzenloch
- 20: Schaft
- 21: Schaftendbereich
- 22: Schaftmittelbereich
- 23: Fixierschraube
- 24: Schraubenmutter
- 25: Fixierbohrung
- 26: Federelement
- 27: Dorn
- 28: Auflageseite des ersten Rahmenstückes
- 29: hinteres Ende
- 30: Endstück
- 31: Öffnung
- 32: hinteres Ende
- 33: Schweißmutter
- 34: Stellschraube
- 35: Ansatzpunkt für Stifte
- 36: Schaftanfangsbereich
- 37: Bohrung
- 38: Fixierblech
- 39: Auflagefläche des dritten Rahmenstückes Rahmenstück
- 40: Zentrierbohrung
- 41: Drittes Rahmenstück
- 42: Flachstück
- 43: Schaftabsatz
- 44: Öffnung

## Patentansprüche

1. Backblech, umfassend einen Rahmen (7) und ein mit dem Rahmen (7) verbundenes Bodenelement (2), wobei
a) der Rahmen (7) mindestens ein Auflagestück (5) mit jeweils mindestens zwei Verbindungslöchern (18) aufweist, in denen jeweils der Schaft (20) eines Verbindungselements (3) angeordnet ist, welches das auf dem Auflagestück (5) aufliegende Bodenelement (2) mit dem Auflagestück (5) verbindet, wobei
b) die Verbindungselemente (3) Bolzen mit einem dem Bodenelement (2) abgewandten, aus dem Auflagestück (5) herausragenden Bolzenschaft (20) sind,
**dadurch gekennzeichnet, dass**
c) mindestens ein Sicherungselement (10) vorgesehen ist, wobei in einer Sicherungsposition des Sicherungselements
aa) sich das Auflagestück (5) zwischen dem Sicherungselement (10) und dem Bodenelement (2) befindet und
bb) das Sicherungselement (10) gleichzeitig an mindestens zwei Bolzenschäften (20) angreifend den jeweiligen Bolzen (3) mittels Formschluss gegen eine Verschiebung des Bolzens (3) in Längsrichtung des Bolzenschaftes (20) sichert, und
d) das Sicherungselement (10) in eine Freigabeposition verfahrbar ist, in der die Bolzenschäfte (20) gleichzeitig freigeben sind.

2. Backblech nach Anspruch 1, **dadurch gekennzeichnet, dass** das Auflagestück (5) ein rohrförmiges oder im Profil u-förmiges Rahmenstück (5) ist und das mindestens eine Sicherungselement (10) von dem mindestens einen Rahmenstück (5) umfasst ist.

3. Backblech nach Anspruch 2, **dadurch gekennzeichnet, dass** das mindestens eine Sicherungselement (10) in Längsrichtung des zugehörigen Rahmenstückes (5) verfahrbar ist.

4. Backblech nach Anspruch 2 oder 3, **dadurch gekennzeichnet, dass** das mindestens eine Sicherungselement (10) im zugehörigen Rahmenstück (5) geführt ist.

5. Backblech nach einem der Ansprüche 1 bis 4, **dadurch gekennzeichnet, dass** das mindestens eine Sicherungselement (10) Sicherungsschlitze (16) aufweist, wobei in der Sicherungsposition jeweils einer der Bolzenschäfte (20) durch einen der Sicherungsschlitze (16) hindurch greift.

6. Backblech nach Anspruch 5, **dadurch gekennzeichnet, dass** die Bolzenschäfte (20) jeweils einen vom Bodenelement (2) abgewandten Bolzenschaftendbereich (21) mit einem die lichte Weite des zugehörigen Sicherungsschlitzes (16) übersteigenden Durchmesser aufweisen.

7. Backblech nach Anspruch 6, **dadurch gekennzeichnet, dass** die Sicherungsschlitze (16) Teil jeweils eines Sicherungsloches (14) sind, wobei die Sicherungslöcher (14) im Wesentlichen eine Schlüssellochform aufweisen und die Sicherungsschlitze (16) jeweils in einen Schlüssellochkopf (15) münden, dessen Durchmesser die lichte Weite des zugehörigen Sicherungsschlitzes (16) sowie den Durchmesser des Bolzenschaftendbereichs (21) übersteigt.

8. Backblech nach einem der Ansprüche 1 bis 7, **dadurch gekennzeichnet, dass** der Eingriff des mindestens einen Sicherungselementes (10) in die Bolzenschäfte (20) derart ausgestaltet ist, dass aufgrund des Verfahrens des Sicherungselements (10) von der Freigabeposition in die Sicherungsposition die Bolzenköpfe (4) in Richtung auf das Auflagestück (5) hin gezogen werden.

9. Backblech nach Anspruch 8, **dadurch gekennzeichnet, dass** in dem mindestens einen Sicherungselement (10) dem Bodenelement (2) abgewandte Führungsrampen (13) vorgesehen sind, wobei die Führungsrampen (13) die Sicherungsschlitze (16) aufweisen, in Verfahrrichtung des Sicherungselements (10) geneigt sind und beim Verfahren des Sicherungselements (10) von der Freigabeposition in die Sicherungsposition auf den Bolzenschaftendbereich (21) wirken.

10. Backblech nach einem der Ansprüche 1 bis 9, **dadurch gekennzeichnet, dass** die Bolzen (3) einstückig mit dem Bodenelement (2) sind.

11. Backblech nach einem der Ansprüche 1 bis 10, **dadurch gekennzeichnet, dass**
a) das mindestens eine Sicherungselement (10) auf seiner dem Auflagestück zugewandten Seite Sicherungslöcher (14) aufweist,
b) die Querschnittsform der Bolzenschäfte (20) und der Umfang der Sicherungslöcher (14) derart aufeinander abgestimmt sind, dass eine Drehung der im zugehörigen Sicherungsloch (14) befindlichen Bolzen (3) um ihre Längsachse nicht möglich ist, und
c) die Bolzenschäfte (20) jeweils einen Schaftabsatz (43) aufweisen, der in der Sicherungsposition das Sicherungselement (10) untergreift.

12. Backblech nach Anspruch 11, **dadurch gekennzeichnet, dass** der Schaftabsatz (43) zur Verfahrrichtung des Sicherungselements (10) geneigt ist

13. Backblech nach einem der Ansprüche 1 bis 12, **dadurch gekennzeichnet, dass** mindestens ein elastisches Spannelement (26) zur Fixierung des mindestens einen Sicherungselementes (10) in der Sicherungsposition vorgesehen ist.

## Claims

1. Baking tray comprising a frame (7) and a base element (2) connected to the frame (7), wherein
a) the frame (7) has at least one supporting piece (5) having in each case at least two connecting holes (18) in which is arranged in each case the shank (20) of a connecting element (3) by means of which the base element (2), which is supported on the supporting piece (5), is connected to the supporting piece (5), wherein
b) the connecting elements (3) are bolts having a shank (20) facing away from the base element (2) and protruding out of the supporting piece (5),
**characterized in that**
c) at least one securing element (10) is provided, wherein, when the securing element is in a securing position,
aa) the supporting piece (5) is located between the securing element (10) and the base element (2) and
bb) the securing element (10), acting simultaneously on at least two bolt shanks (20), secures the respective bolt (3) by means of a form fit against displacement of the bolt (3) in the longitudinal direction of the bolt shank (20), and
d) the securing element (10) can be moved into a release position in which the bolt shanks (20) are released simultaneously.

2. Baking tray according to Claim 1, **characterized in that** the supporting piece (5) is a frame piece (5) which is tubular or has a u-shaped profile and the at least one securing element (10) is surrounded by the at least one frame piece (5).

3. Baking tray according to Claim 2, **characterized in that** the at least one securing element (10) can be moved in the longitudinal direction of the associated frame piece (5).

4. Baking tray according to Claim 2 or 3, **characterized in that** the at least one securing element (10) is guided in the associated frame piece (5).

5. Baking tray according to one of Claims 1 to 4, **characterized in that** the at least one securing element (10) has securing slots (16), wherein, in the securing position, in each case one of the bolt shanks (20) engages through one of the securing slots (16).

6. Baking tray according to Claim 5, **characterized in that** the bolt shanks (20) have a respective end region (21) facing away from the base element (2) and having a diameter exceeding the clear width of the associated securing slot (16).

7. Baking tray according to Claim 6, **characterized in that** the securing slots (16) are part of a respective securing hole (14), wherein the securing holes (14) are substantially in the form of a keyhole and the securing slots (16) open out in each case into a keyhole head (15), the diameter of which exceeds the clear width of the associated securing slot (16) and also the diameter of the bolt shank end region (21).

8. Baking tray according to one of Claims 1 to 7, **characterized in that** the at least one securing element (10) engages in the bolt shanks (20) in such a way that, as a result of the securing element (10) moving from the release position into the securing position, the bolt heads (4) are pulled in the direction of the supporting piece (5).

9. Baking tray according to Claim 8, **characterized in that** guide ramps (13) facing away from the base element (2) are provided in the at least one securing element (10), wherein the guide ramps (13) have the securing slots (16), are inclined in the direction of movement of the securing element (10) and, when the securing element (10) is moved from the release position into the securing position, act on the bolt shank end region (21).

10. Baking tray according to one of Claims 1 to 9, **characterized in that** the bolts (3) are integral with the base element (2).

11. Baking tray according to one of Claims 1 to 10, **characterized in that**
a) the at least one securing element (10) has securing holes (14) on its side facing the supporting piece,
b) the cross-sectional shape of the bolt shanks (20) and the periphery of the securing holes (14) are matched to one another such that it is not possible for the bolts (3) located in the associated securing hole (14) to be rotated about their longitudinal axis, and
c) the bolt shanks (20) have a respective shoulder (43) which engages under the securing element (10) in the securing position.

12. Baking tray according to Claim 11, **characterized in that** the shank shoulder (43) is inclined in relation to the direction of movement of the securing element (10).

13. Baking tray according to one of Claims 1 to 12, **characterized in that** at least one elastic stressing element (26) for fixing the at least one securing element (10) in the securing position is provided.

## Revendications

1. Plateau de cuisson, comprenant un cadre (7) et un élément plancher (2) relié au cadre (7) ;
a) le cadre (7) comportant au moins une pièce d'appui (5) présentant respectivement au moins deux trous de jonction (18) dans lesquels est disposée respectivement la tige (20) d'un élément de jonction (3) qui relie l'élément plancher (2) reposant sur la pièce d'appui (5) à la pièce d'appui (5) ;
b) les éléments de jonction (3) étant des boulons avec une tige de boulon (20) ressortant de la pièce d'appui (5) opposée à l'élément plancher (2) ;
**caractérisé en ce que** :
c) au moins un élément de fixation (10) est prévu, dans une position de fixation de l'élément de fixation
aa) la pièce d'appui (5) se trouvant entre l'élément de fixation (10) et l'élément plancher (2) ; et
bb) l'élément de fixation (10) fixant en même temps, en emboîtant au moins deux tiges de boulon (20), le boulon (3) respectif par complémentarité de formes pour empêcher tout déplacement du boulon (3) dans la direction longitudinale de la tige de boulon (20) ; et
d) l'élément de fixation (10) pouvant être déplacé dans une position de libération dans laquelle les tiges de boulon (20) sont libérées simultanément.

2. Plateau de cuisson selon la revendication 1, **caractérisé en ce que** la pièce d'appui (5) est une pièce de cadre de forme tubulaire ou présente un profil en U (5) et l'au moins un élément de fixation (10) est composé de l'au moins une pièce de cadre (5).

3. Plateau de cuisson selon la revendication 2, **caractérisé en ce que** l'au moins un élément de fixation (10) peut être déplacé dans la direction longitudinale de la pièce de cadre (5) associée.

4. Plateau de cuisson selon la revendication 2 ou 3, **caractérisé en ce que** l'au moins un élément de fixation (10) est guidé dans la pièce de cadre (5) associée.

5. Plateau de cuisson selon l'une quelconque des revendications 1 à 4, **caractérisé en ce que** l'au moins un élément de fixation (10) comporte des fentes de fixation (16), une des tiges de boulon (20) traversant respectivement une des fentes de fixation (16) dans la position de fixation.

6. Plateau de cuisson selon la revendication 5, **caractérisé en ce que** les tiges de boulon (20) comportent respectivement une zone d'extrémité de tige de boulon (21) opposée à l'élément plancher (2) avec un diamètre dépassant la largeur intérieure de la fente de fixation (16) associée.

7. Plateau de cuisson selon la revendication 6, **caractérisé en ce que** les fentes de fixation (16) font respectivement partie d'un trou de fixation (14), les trous de fixation (14) présentant pour l'essentiel une forme de trou de serrure et les fentes de fixation (16) débouchant respectivement dans une tête de trou de serrure (15) dont le diamètre dépasse la largeur intérieure de la fente de fixation (16) associée ainsi que le diamètre de la zone d'extrémité de tige de boulon (21).

8. Plateau de cuisson selon l'une quelconque des revendications 1 à 7, **caractérisé en ce que** l'emboîtement de l'au moins un élément de fixation (10) dans les tiges de boulon (20) est conçu de telle sorte que du fait du déplacement de l'élément de fixation (10) de la position de libération dans la position de fixation, les têtes de boulon (4) sont tirées en direction de la pièce d'appui (5).

9. Plateau de cuisson selon la revendication 8, **caractérisé en ce que** des rampes de guidage (13) opposées à l'élément plancher (2) sont prévues dans l'au moins un élément de fixation (10), lesdites rampes de guidage (13) comportant des fentes de fixation (16) inclinées dans la direction de déplacement de l'élément de fixation (10) et agissant sur la zone d'extrémité de tige de boulon (21) lors du déplacement de l'élément de fixation (10) de la position de libération dans la position de fixation.

10. Plateau de cuisson selon l'une quelconque des revendications 1 à 9, **caractérisé en ce que** les boulons (3) sont réalisés d'un seul tenant avec l'élément plancher (2).

11. Plateau de cuisson selon l'une quelconque des revendications 1 à 10, **caractérisé en ce que** :
a) l'au moins un élément de fixation (10) comporte des trous de fixation (14) sur son côté orienté vers la pièce d' appui ;
b) la forme en section transversale des tiges de boulon (20) et le périmètre des trous de fixation (14) sont ajustés de telle sorte l'un par rapport à l'autre qu'une rotation des boulons (3) dans le trou de fixation (14) associé n'est pas possible autour de leur axe longitudinal ; et
c) les tiges de boulon (20) comportent respectivement une protubérance de tige (43) qui dans la position de fixation saisit sous l'élément de fixation (10).

12. Plateau de cuisson selon la revendication 11, **caractérisé en ce que** la protubérance de tige (43) est inclinée dans la direction de déplacement de l'élément de fixation (10).

13. Plateau de cuisson selon l'une quelconque des revendications 1 à 12, **caractérisé en ce qu'**au moins un élément de serrage (26) élastique est prévu pour fixer l'au moins un élément de fixation (10) dans la position de fixation.
